Europäisches Patentamt

European Patent Office

Office européen des brevets

(11) Veröffentlichungsnummer: **0 294 754 B1**

# (12) EUROPÄISCHE PATENTSCHRIFT

(45) Veröffentlichungstag der Patentschrift: **12.08.92**

(51) Int. Cl.5: **C09J 5/00**

(21) Anmeldenummer: **88109032.8**

(22) Anmeldetag: **07.06.88**

(54) Verfahren und Vorrichtung zum Verkleben zweier im wesentlichen flächiger Elemente.

(30) Priorität: **12.06.87 DE 3719599**

(43) Veröffentlichungstag der Anmeldung:
**14.12.88 Patentblatt 88/50**

(45) Bekanntmachung des Hinweises auf die
Patenterteilung:
**12.08.92 Patentblatt 92/33**

(84) Benannte Vertragsstaaten:
**AT BE CH DE ES FR GB GR IT LI LU NL SE**

(56) Entgegenhaltungen:
**DE-A- 3 150 844**
**GB-A- 2 149 719**

**PATENT ABSTRACTS OF JAPAN, Band 10, Nr. 226 (C-364)[2282], 7. August 1986; & JP-A-61 62 575 (TOYO ENG. CORP.) 31-03-1986**

(73) Patentinhaber: **Teroson GmbH**
**Hans-Bunte-Strasse 4**
**W-6900 Heidelberg 1(DE)**

(72) Erfinder: **Delbeck, Jean-Willem**
**Steinbacher Weg 15**
**W-6380 Bad Homburg(DE)**
Erfinder: **Schleicher, Anton Michael**
**Rottmannstrasse 2-4**
**W-6900 Heidelberg(DE)**

(74) Vertreter: **UEXKÜLL & STOLBERG Patentanwälte**
**Beselerstrasse 4**
**W-2000 Hamburg 52(DE)**

**Beschreibung**

Die Erfindung betrifft ein Verfahren und eine Vorrichtung zum Verkleben zweier im wesentlichen flächiger Elemente, bei welchem auf das erste Element ein hochviskoser Dichtstoff in einer mindestens dem gewünschten Abstand zu dem zweiten Element entsprechenden Dicke aufgetragen und das zweite Element über Abstandshalter auf das erste Element gelegt und angedrückt wird.

Ein derartiges Verfahren wird beispielsweise zur Herstellung von Doppelverglasungen verwendet, wobei die Elemente Glasscheiben sind und als Abstandshalter zur Fixierung beider Scheiben in einem definierten Abstand zueinander Stege aus Metall, vorzugsweise aus Aluminium, verwendet werden. Diese Metall-Stege werden entweder vor oder nach Auftrag des hochviskosen Dichtstoffes in einem separaten Arbeitsgang auf die erste Scheibe geklebt. In der Regel wird dabei der Dichtstoff auf die erste Scheibe vollständig entlang deren Seitenkanten mittels einer Auftragsdüse aufgetragen und der Metallsteg an der Innenseite des Dichtstoffes angeordnet, so daß nach Auflegen der zweiten Scheibe ein luftdichter Abschluß des Zwischenraums durch den umlaufenden Dichtstoff erfolgt.

Der Nachteil dieses Verfahrens besteht jedoch darin, daß für die Anordnung und Befestigung der als Abstandshalter dienenden Metall-Stege ein gesonderter Arbeitsschritt notwendig ist, der entweder vor oder nach Auftrag des Dichtstoffes durchgeführt wird, was einen erhöhten materiellen und personellen Aufwand erfordert. Hinzu kommt, daß die Metall-Stege in ihrer Lage und Länge dem Verlauf des Dichtstoffes und der Seitenkanten der Scheiben angepaßt werden müssen. Aus diesen Gründen ist auch eine Automatisierung dieses Verfahrens schwierig und aufwendig.

In der DE-OS 21 30 773 ist ein Klebstoff beschrieben, der einen kalibrierten Füllstoff, vorzugsweise Glaskügelchen enthält. Ein solcher Klebstoff eignet sich nicht für die automatisierte Verarbeitung in einem Verfahren der vorstehend beschriebenen Art. Einerseits neigen Glaskügelchen mit Abmessungen, wie man sie als Abstandshalter für Doppelverglasungen benötigt, dazu, sich innerhalb der Klebstoffmasse abzusetzen. Vor allem aber gehen die Kügelchen, wenn sie willkürlich in dem Klebstoff verteilt sind, nicht gleichmäßig durch eine Auftragsdüse hindurch, deren Innendurchmesser nur wenig größer als ihr Außendurchmesser ist. Vielmehr besteht die Gefahr, daß die Kügelchen sich vor der Auftragsdüse ansammeln und diese verstopfen.

Der Erfindung liegt die Aufgabe zugrunde, das Verfahren der eingangs genannten Art dahingehend zu verbessern, daß die Abstandshalter nicht mehr in einem vom Auftrag des Dichtstoffes getrennten Arbeitsschritt zwischen den Elementen befestigt zu werden brauchen, wobei das verbesserte Verfahren insbesondere auch der Automatisierung zugänglich sein soll.

Diese Aufgabe wird durch das in Anspruch 1 bezeichnete Verfahren gelöst. Bevorzugte Ausführungsformen der Erfindung ergeben sich aus den Unteransprüchen.

Bei dem erfindungsgemäßen Verfahren werden als Abstandshalter Kugeln verwendet, die dem Dichtstoff vor dessen Auftrag in einer Auftragsdüse nacheinander zugegeben werden.

Dadurch ist es möglich, die Abstandshalter in einem einzigen Arbeitsgang zusammen mit dem Dichtstoff aufzutragen. Dadurch, daß die Kugeln dem Dichtstoff erst in der Auftragsdüse nacheinander zugegeben werden, ist gewährleistet, daß sie zusammen mit dem Dichtstoff in geordneter Weise aus der Auftragsdüse austreten. Die Gefahr einer Verstopfung der Auftragsdüse durch die Kugeln wird auf diese Weise vermieden. Nach Auftrag des die Kugeln enthaltenen Dichtstoffes auf das erste Element wird das zweite Element aufgelegt und in Richtung auf das erste Element angedrückt, bis die im Dichtstoff eingebetteten Kugeln mit beiden Elementen in Berührung kommen, so daß beide Elemente in einem durch den Durchmesser der Kugeln definierten Abstand fixiert werden.

Mit der erfindungsgemäßen Lösung kann insbesondere die Herstellung von Doppelverglasungen vereinfacht werden, da die Abstandshalter nicht mehr in einem gesonderten Arbeitsschritt, sondern gleichzeitig mit dem Auftrag des Dichtstoffes positioniert werden.

Ferner eignet sich die Erfindung auch zur vereinfachten Anbringung von Glasscheiben an Automobilen. Zum Ausgleich von Fertigungstoleranzen, die insbesondere bei gewölbten Scheiben auftreten, werden nämlich die Automobilscheiben über Distanzhalter am Karosserieflansch befestigt und verklebt, was ebenfalls einen gesonderten Arbeitsschritt erfordert. Da dieser Arbeitsschritt beim erfindungsgemäßen Verfahren entfällt, kann somit die Anbringung von Glasscheiben an Automobilkarosserien wesentlich einfacher, schneller und kostengünstiger durchgeführt werden, was insbesondere bei einer automatisierten Produktion von Vorteil ist.

Vorzugsweise sollten die Kugeln aus festem Material wie Glas, Kunststoff, Keramik oder Stahl bestehen, da ein definierter Abstand zwischen beiden Scheiben gewährleistet sein soll.

In einer bevorzugten Ausführungsform des Verfahrens sollten die Kugeln nacheinander in einem festen Zeitintervall in den Dichtstoff vor dessen Auftrag auf die erste Scheibe zugegeben werden, woraus sich nach Auftrag des Dichtstoffes automatisch ein bestimmter Abstand der in den Dichtstoff eingebetteten Kugeln zueinander ergibt.

Wenn bei Verwendung des erfindungsgemäßen Verfahrens zur Herstellung von Doppelverglasungen der Dichtstoff auf die erste Scheibe vollständig entlang deren Seitenkanten aufgetragen wird, sollte vorzugsweise nach Auftrag des Dichtstoffes auf die erste Scheibe und vor Auflegen der zweiten Scheibe ein Druckausgleichsröhrchen in den Dichtstoff eingelegt, nach Auflegen der zweiten Scheibe ein Unterdruck an das Druckausgleichsröhrchen angelegt und anschließend das Druckausgleichsröhrchen verschlossen und nach Aushärten des Dichtstoffes der Unterdruck zwischen den beiden Scheiben wieder abgebaut werden. Durch die Erzeugung eines Unterdrucks zwischen beiden Scheiben über ein Druckausgleichsröhrchen werden beide Scheiben während des Aushärtens des Dichtstoffes aneinander gedrückt und sind somit zueinander fixiert.

Ferner ist es Aufgabe der Erfindung, eine Vorrichtung mit einer Auftragsdüse zum Zuleiten und Auftragen des Dichtstoffes dahingehend zu verbessern, daß mit ihr das erfindungsgemäße Verfahren durchführbar ist.

Diese Aufgabe wird dadurch gelöst, daß eine Kugelzuführeinrichtung mit einem Zuführkanal zum Zuführen der Kugeln, mit einem Mündungsrohr, das sich in einem Winkel an den Zuführkanal anschließt und über eine Öffnung seitlich in die Auftragsdüse mündet, und mit einem Stoßkolben, der durch das von der Auftragsdüse abgewandten Ende in das Mündungsrohr hinein bewegbar ist, vorgesehen ist, wobei die lichte Weite der Auftragsdüse, des Zuführkanals und des Mündungsrohres größer und der Außendurchmesser des Stoßkolbens kleiner als der Durchmesser der Kugeln sind.

Demnach wird eine herkömmliche Auftragsdüse durch die der Dichtstoff geleitet und aufgetragen wird, erfindungsgemäß um die Kugelzuführeinrichtung erweitert, durch die die Kugeln in die Auftragsdüse geleitet und somit in den dort befindlichen Dichtstoff vor dessen Abgabe zugegeben werden. Dabei werden die Kugeln über den Zuführkanal in das sich anschließende Mündungsrohr geleitet und von dort mit dem Stoßkolben in die Auftragsdüse gestoßen. Daß sich der Stoßkolben und der in das Mündungsrohr mündende Zuführkanal nicht gegenseitig behindern, wird dadurch erreicht, daß der Zuführkanal in einem Winkel mit dem Mündungsrohr verbunden ist. Somit werden die Kugeln vom Zuführkanal seitlich in das Mündungsrohr geleitet, bevor sie mit dem Stoßkolben durch das Mündungsrohr in die Auftragsdüse gestoßen werden.

Besonders vorteilhaft eignet sich die erfindungsgemäße Vorrichtung zur automatisierten Herstellung von Doppelverglasungen (Isolierglasscheiben) sowie zur automatisierten Befestigung von Glasscheiben an Fahrzeugkarosserien. Das Durchleiten und Abgeben des Dichtstoffes durch die Auftragsdüse, die Zuführung der Kugeln und die Bewegung des Stoßkolbens können in einfacher Weise durch geeignete Einrichtungen mechanisiert werden, wobei die Zuführung der Kugeln durch den Zuführkanal auch mit Hilfe der Schwerkraft erfolgen kann. Mit einer Steuereinrichtung kann dabei der Arbeitsablauf der erfindungsgemäßen Vorrichtung in einfacher Weise gesteuert werden.

In einer vorteilhaften Weiterbildung schließt sich das Mündungsrohr winklig an den Zuführkanal an und mündet ebenfalls winklig in die Auftragsdüse. Auf diese Weise erhält man eine besonders kompakte Anordnung, da der Zuführkanal zumindest im Verbindungsbereich mit dem Mündungsrohr in derselben Ebene wie die Auftragsdüse liegt.

Vorzugsweise sollte der Stoßkolben von einem Pneumatik-Zylinder antreibbar sein, da ein derartiger Antrieb einen sehr einfachen Aufbau ergibt.

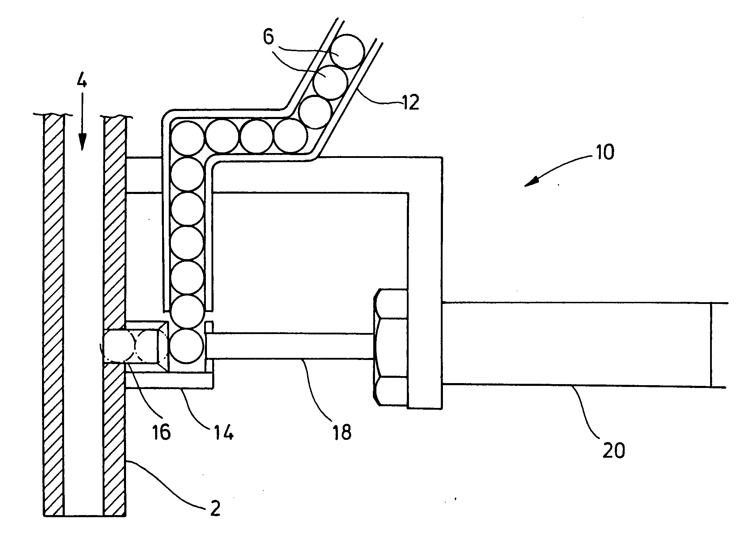

Die Erfindung wird nachstehend anhand der einzigen Zeichnung erläutert, welche die dargestellte Ausführungsform der Vorrichtung im Schnitt zeigt.

Die Figur zeigt die wesentlichen Komponenten der Vorrichtung, nämlich eine Auftragsdüse 2, durch die in Richtung des Pfeils 4 der Dichtstoff geleitet und abgegeben wird, und eine Kugelzuführeinrichtung 10. Die Kugelzuführeinrichtung 10 weist einen Zuführkanal 12 zum Zuführen der Kugeln 6 und ein Mündungsrohr 14 auf, das sich im rechten Winkel an den Zuführkanal 12 anschließt und ebenfalls im rechten Winkel über eine Öffnung 16 seitlich in die Auftragsdüse 2 mündet. Ferner ist ein Stoßkolben 18 vorgesehen, der von einem Pneumatik-Zylinder 20 antreibbar und durch das von der Auftragsdüse 2 abgewandte Ende in das Mündungsrohr 14 bewegbar ist. Daß sich der Zuführkanal 12 und der Stoßkolben 18 gegenseitig nicht behindern, liegt an dem rechtwinkligen Anschluß des Zuführkanals 12 an das Mündungsrohr 14.

Das Durchleiten des Dichtstoffes durch die Auftragsdüse 2 kann mit Hilfe einer Pumpe und die Zuführung der Kugeln 6 durch eine geeignete Fördereinrichtung erfolgen. Ebenfalls kann aber auch die Zuführung der Kugeln 6 durch den Zuführkanal 12 mit Hilfe der Schwerkraft erfolgen, so daß auf gesonderte Fördereinrichtungen verzichtet werden kann.

Im folgenden soll das Verfahren zum Verkleben zweier im wesentlichen flächiger Elemente mit Hilfe der beschriebenen Vorrichtung erläutert werden:
Während durch die Auftragsdüse 2 der hochviskose Dichtstoff in Richtung des Pfeils 4 geleitet bzw. gepumpt wird, werden die Kugeln 6 nacheinander mit dem Stoßkolben 18 durch das Mündungsrohr 14 und die Öffnung 16 von der Seite in die Auftragsdüse 2 gestoßen und somit in den dort befindlichen Dichtstoff gegeben. Anschließend wird der Dichtstoff mit den darin eingebetteten Kugeln 6 aus der Auftragsdüse 2 abgegeben und auf das erste Element aufgetragen. Der Stoßkolben 18 wird nur in bestimmten Zeitintervallen betätigt, damit die Kugeln 6 in einem bestimmten zeitlichen Abstand zueinander in den Dichtstoff gegeben und dadurch nach dessen Auftrag auf dem Element in einem bestimmten räumlichen Abstand zueinander positioniert werden.

Anschließend wird das zweite Element aufgelegt und gegen das erste Element gedrückt, bis die im Dichtstoff eingebetteten Kugeln mit beiden Elementen in Berührung kommen. Damit die Kugeln als Abstandshalter zur Fixierung beider Elemente in einem definierten Abstand zueinander dienen können, bestehen sie aus festem Material wie Glas, Kunststoff, Keramik oder Stahl.

Wenn bei Verwendung des erfindungsgemäßen Verfahrens zur Herstellung von Doppelverglasungen der Dichtstoff auf die erste Scheibe vollständig entlang deren Seitenkanten aufgetragen wird, kann vor Auflegen der zweiten Scheibe ein Druckausgleichsröhrchen eingelegt werden, an das nach Auflegen der zweiten Scheibe ein Unterdruck angelegt wird. Dadurch entsteht in dem Zwischenraum zwischen beiden Scheiben, der von dem entlang der Seitenkanten der Scheiben streifenförmig umlaufenden Dichtstoff abgedichtet ist, ein Unterdruck, wodurch beide Scheiben aneinandergedrückt werden und somit zueinander fixiert sind. Dabei wird das Druckausgleichsröhrchen so lange geschlossen gehalten, bis der Dichtstoff ausgehärtet ist. Anschließend wird der Unterdruck wieder abgebaut. Auf diese Weise erhält man eine Doppelverglasung, wobei der Abstand beider Scheiben zueinander durch die im Dichtstoff liegenden Kugeln erreicht wird. Da die Kugeln vom Dichtstoff umschlossen sind, wird gleichzeitig eine sichere Abdichtung des Zwischenraums zwischen beiden Scheiben nach außen gewährleistet.

**Patentansprüche**

1. Verfahren zum Verkleben zweier im wesentlichen flächiger Elemente, bei welchem auf das erste Element ein hochviskoser Dichtstoff, der als Abstandshalter Kugeln enthält, in einer mindestens dem gewünschten Abstand zu dem zweiten Element entsprechenden Dicke aufgetragen, und das zweite Element auf das erste Element gelegt und angedrückt wird, dadurch gekennzeichnet, daß die Kugeln dem Dichtstoff vor dessen Auftrag in einer Auftragsdüse nacheinander zugegeben werden.

2. Verfahren nach Anspruch 1, dadurch gekennzeichnet, daß die Kugeln aus festem Material wie Glas, Kunststoff, Keramik oder Stahl bestehen.

3. Verfahren nach einem der Ansprüche 1 oder 2, dadurch gekennzeichnet, daß die Elemente Scheiben, insbesondere Glasscheiben sind.

4. Verfahren nach Anspruch 1, 2 oder 3, dadurch gekennzeichnet, daß die Zugabe der Kugeln in einem festen Zeitintervall erfolgt.

5. Verfahren nach Anspruch 4, bei welchem der Dichtstoff auf die erste Scheibe vollständig entlang deren Seitenkanten aufgetragen wird, dadurch gekennzeichnet, daß nach Auftrag des Dichtstoffes auf die erste Scheibe und vor Auflegen der zweiten Scheibe ein Druckausgleichsröhrchen in den Dichtstoff eingelegt, nach Auflegen der zweiten Scheibe ein Unterdruck an das Druckausgleichsröhrchen angelegt, anschließend das Druckausgleichsröhrchen verschlossen und nach Aushärten des Dichtstoffes der Unterdruck zwischen den beiden Scheiben wieder abgebaut wird.

6. Vorrichtung zur Durchführung des Verfahrens gemäß einem der Ansprüche 1 bis 5, mit einer Auftragsdüse (2) zum Zuleiten und Auftragen des Dichtstoffes (4), gekennzeichnet durch eine Kugelzuführeinrichtung (10)
   - mit einem Zuführkanal (12) zum Zuführen der Kugeln (6),
   - mit einem Mündungsrohr (14), das sich in einem Winkel an den Zuführkanal (12) anschließt und über eine Öffnung (16) seitlich in die Auftragsdüse (12) mündet, und
   - mit einem Stoßkolben (18), der durch das von der Auftragsdüse (2) abgewandten Ende in das Mündungsrohr (14) hinein bewegbar ist,
   - wobei die lichte Weite der Auftragsdüse (2), des Zuführkanals (12) und des Mündungsrohres (14) größer und der Außendurchmesser des Stoßkolbens (18) kleiner als der Durchmesser der Kugeln (6) sind.

7. Vorrichtung nach Anspruch 5, **dadurch gekennzeichnet,** daß das Mündungsrohr (14) sich winklig an den Zuführkanal (12) anschließt und ebenfalls winklig in die Auftragsdüse (2) mündet.

8. Vorrichtung nach Anspruch 5 oder 6, **dadurch gekennzeichnet,** daß der Stoßkolben (18) von einem Pneumatik-Zylinder (20) antreibbar ist.

## Claims

1. A process for adhesively bonding two substantially planar elements, wherein a highly viscous sealant which contains balls as spacers is applied to the first element in a thickness which corresponds at least to the desired interval from the second element, and the second element is applied to and pressed against the first element, characterised in that the balls are added consecutively to the sealant prior to its application in an application nozzle.

2. A process as claimed in Claim 1, characterised in that the balls consist of solid material, such as glass, synthetic resin, ceramic or steel.

3. A process as claimed in one of Claims 1 or 2, characterised in that the elements are sheets, in particular glass panes.

4. A process as claimed in Claims 1, 2 or 3, characterised in that the balls are added at fixed intervals of time.

5. A process as claimed in Claim 4, wherein the sealant is applied to the first sheet continuously along its side edges, characterised in that a pressure-compensating pipe is introduced into the sealant following the application of the sealant to the first sheet and prior to the application of the second sheet, a vacuum is connected to the pressure-compensating pipe following the application of the second sheet, whereupon the pressure-compensating pipe is closed and, following the hardening of the sealant, the vacuum between the two sheets is broken down again.

6. A device for the implementation of the process as claimed in one of Claims 1 to 5, with an application nozzle (2) for the conveyance and application of the sealant (4), characterised by a ball supply device (10)
   - comprising a supply channel (12) for supplying the balls (6),
   - comprising an outlet pipe (14) which adjoins the supply channel (12) at an angle and, via an opening (16), leads laterally into the application nozzle (12) and
   - comprising a ram (18) which, by the end facing away from the application nozzle (2), can be moved into the outlet pipe (14),
   - wherein the internal width of the application nozzle (2), the supply channel (12) and the outlet pipe (14) is greater than, and the outer diameter of the ram (18) is smaller than, the diameter of the balls (6).

7. A device as claimed in Claim 5, characterised in that the outlet pipe (14) adjoins the supply channel (12) at an angle and leads into the application nozzle (2) likewise at an angle.

8. A device as claimed in Claim 5 or 6, characterised in that the ram (18) can be driven by a pneumatic cylinder (20).

## Revendications

1. Procédé pour coller deux éléments sensiblement plats dans lequel est appliqué sur le premier élément une matière déterminée à viscosité élevée qui contient comme écarteurs des perles, sous une épaisseur correspondant au moins à la distance souhaitée par rapport au deuxième élément, et le deuxième élément est disposé comprimé sur le premier élément, procédé caractérisé en ce que les perles sont mises l'une après l'autre dans la matière d'étanchéité avant son application dans une buse d'application.

2. Procédé selon la revendication 1, caractérisé en ce que les perles sont réalisées en une matière solide telle que le verre, la matière plastique, la céramique ou l'acier.

3. Procédé selon l'une des revendications 1 ou 2, caractérisé en ce que les éléments sont des vitres, en particulier en verre.

4. Procédé selon les revendications 1, 2 ou 3, caractérisé en ce que l'alimentation des perles a lieu à intervalles de temps fixes.

5. Procédé selon la revendication 4, dans lequel la matière d'étanchéité est appliquée sur la première vitre, tout le long de ses bords, procédé caractérisé en ce qu'après l'application de la matière d'étanchéité sur la première vitre et avant le dépôt de la deuxième vitre on insère un petit tube de compensation de pression dans la matière d'étanchéité, après le dépôt de la deuxième vitre on établit une sous-pression sur le petit tube de compensation de pression, ensuite on ferme le petit tube de compensation de pression et on abat de nouveau la sous-pression après le durcissement de la matière d'étanchéité entre les deux vitres.

6. Dispositif pour la mise en oeuvre du procédé selon l'une des revendications 1 à 5, avec une buse d'application (2) pour amener et appliquer la matière d'étanchéité (4), dispositif caractérisé par un dispositif d'alimentation de perles (10):

- avec un canal d'amenée (12) pour amener les perles (6);
- avec un tuyau d'embouchure (14), qui se raccorde sous un certain angle au canal d'amenée (12) et débouche par l'intermédiaire d'un orifice (16) latéralement dans la buse d'application (12) et
- avec un piston de poussée (18), qui peut se mouvoir à travers l'extrémité tournée à l'opposé de la buse d'application (2) dans le tuyau d'embouchure (14),
- tandis que la largeur libre de la buse d'application (2), du canal d'amenée (12) et du tuyau d'embouchure (14) est plus grande et le diamètre extérieur du piston de poussée (18) est plus petit que le diamètre des perles (6).

7. Dispositif selon la revendication 5, caractérisé en ce que le tuyau d'embouchure (14) se raccorde en formant un angle au canal d'amenée (12) et débouche également en formant un angle dans la buse d'application (2).

8. Dispositif selon la revendication 5 ou 6, caractérisé en ce que le piston de poussée (18) peut être entraîné par un vérin pneumatique (20).